# EUROPÄISCHE PATENTSCHRIFT

(11) **EP 1 356 003 B1**
(45) Veröffentlichungstag und Bekanntmachung des Hinweises auf die Patenterteilung: **23.11.2005**
(21) Anmeldenummer: 01983747.5
(22) Anmeldetag: 28.11.2001
(51) Int. Cl.: C09D 163/00, C04B 41/63

(54) **VORANSTRICH FÜR BETON**
UNDERCOATING FOR CONCRETE
PEINTURE PRELIMINAIRE POUR BETON

(30) Priorität: 23.12.2000 EP 00128475
(43) Veröffentlichungstag der Anmeldung: 29.10.2003
(73) Patentinhaber: Sika Schweiz AG, 8064 Zürich (CH)
(72) Erfinder: TRABESINGER, Gerald, CH-8722 Kaltbrunn (CH); MERZ, Peter, W., CH-8832 Wollerau (CH)
(74) Vertreter: Isler, Jörg
(86) Internationale Anmeldenummer: PCT/IB2001/002247
(87) Internationale Veröffentlichungsnummer: WO 2002/051953

(56) Entgegenhaltungen:
- EP-A- 0 615 965
- EP-A- 1 048 682
- DE-A- 10 026 148
- US-A- 4 101 497
- DATABASE WPI Section Ch, Week 199349 Derwent Publications Ltd., London, GB; Class A21, AN 1993-392931 XP002168682 & JP 05 295329 A (HITACHI CHEM CO LTD), 9. November 1993 (1993-11-09)
- DATABASE WPI [Online] DERWENT PUBLICATIONS LTD., LONDON, GB; Database accession no. 1988-364079 -& JP 63 273629 A (YOKOHAMA RUBBER CO LTD, JAPAN) 10. November 1988 (1988-11-10)

## Beschreibung

### Technisches Gebiet

Die vorliegende Erfindung betrifft neue Voranstriche für die Haftungsverbesserung von Substraten, insbesondere von porösen Untergründen, wie z.B. Beton, mit ein- oder zweikomponentigen Klebstoffsystemen.

### Stand der Technik

Voranstriche, auch als Primer, Aktivator oder Haftvermittler bezeichnet, kommen überall dort zur Anwendung, wo der eingesetzte Klebstoff keine oder nur eine beschränkte Haftung zum Substrat bzw. Untergrund erzielt. Dabei sind die Komponenten des Klebstoffsystems, nämlich die Vorbehandlung, d.h. der Voranstrich, und der Klebstoff zueinander und zum Substrat abgestimmt. Solche Voranstriche können physikalisch verfestigend oder chemisch vernetzbar sein. Vorbehandlungssysteme für diverse Substrate sind bekannt, jedoch sind keine Voranstriche für poröse Untergründe auf dem Markt, welche einkomponentig, frei von Isocyanaten, frei von aromatischen Lösemitteln und mit einfachen Hilfsmitteln, wie z.B. Pinsel, applizierbar sind und in Kombination mit feuchtigkeitsreaktiven Klebstoffen bzw. Dichtstoffen, insbesondere mit isocyanatfreien Dichtstoffen auf der Basis von Silangruppen terminierten Prepolymeren, bekannt als Polyurethan-Hybrid oder MS-Kaneka Systeme, eine gute, alterungsbeständige Haftung aufweisen.

In EP 0 921 140 A1 und US 6,080,817, sind Voranstriche mit Isocyanatgruppen enthaltenden Bindemitteln beschrieben, wobei diese Voranstriche dem Aufbringen von Farbe bei der Automobilherstellung dienen.

Aus DE 100 26 148 A1 bereits bekannt sind Voranstriche, die ein Epoxidharz, einen latenten Härter, ein Lösungsmittel sowie Vinyltrimethoxysilan enthalten.

EP-A-0 615 965 beschreibt einen zwei- oder dreikomponentigen Voranstrich mit einem flüssigen Epoxidharz, einem hydrophoben Polyamin, einem Thixotropiermittel sowie einem Silanhaftvermittler.

JP 63273629 beschreibt eine Beschichtungszusammensetzung aus Epoxidharz, einem Ketimin, einem modifizierten Silikonharz, einem Katalysator für das Silikonharz sowie einer Silanverbindung.

Die vorliegende Erfindung hat zum Ziel, neue isocyanatfreie Voranstriche für die Haftverbesserung von Substraten, insbesondere von porösen Substraten, wie z.B. Beton bereitzustellen.

### Darstellung der Erfindung

Überraschenderweise wurde nun gefunden, dass ein Voranstrich mit einer Viskosität zwischen 20 und 200 mPas enthaltend oder bestehend aus mindestens einem festen Epoxidharz, mindestens einem latenten Härter, mindestens einem haftvermittelndem Additiv, welches mindestens 2 funktionelle Gruppen enthält, wobei mindestens eine davon eine Epoxidgruppe ist, die mit dem latenten Härter regieren kann, und mindestens eine davon eine Silangruppe oder eine Titanatgruppe ist, und mindestens einem Lösemittel, die gewünschte gute Affinität zu porösen Untergründen, wie z.B. Beton (DIN-genormt oder sandgestrahlt), Klinker saugend, Keramik, Gartenplatten, Sichtbackstein und diversen Holzarten (Buche, Föhre, Teak u.a.), sowie auch zu nicht-porösen Untergründen, wie Klinker glasiert, aufweist und damit eine gute Haftung des Beschichtungsmaterials ermöglicht. Bevorzugte Beschichtungsmaterialien sind insbesondere einkomponentige Dichtstoffe auf Silan-Basis. Ferner sind die erfindungsgemässen Voranstriche auch sehr einfach herstellbar.

### Wege zur Ausführung der Erfindung

In den erfindungsgemässen Voranstrichen umfassend mindestens ein festes Epoxidharz, mindestens einen latenten Härter, mindestens ein haftvermittelndes Additiv und mindestens ein Lösungsmittel bevorzugt eingesetzte Stoffe sind nachfolgend näher beschrieben.

Als Epoxidharze kommen in Betracht aliphatische und aromatische Epoxidgruppen tragende Verbindungen, die bei Raumtemperatur fest sind. Bevorzugte Epoxidharze sind: feste Epoxyharze auf Bisphenol-A-Basis mit mittlerem Molekulargewicht.

Latente Härter können aus den Stoffgruppen, Ketimine, Aldimine bzw. Oxazolidine ausgewählt werden, wobei cyclische, aliphatische Ketimine bevorzugt sind. Bevorzugte latente Härter sind: blockierte, cycloaliphatische Diamine und/oder Urethanbisoxazolidine.

Als Lösemittel kommen aus ökologischen Gründen bevorzugt aliphatische Lösemittel in Frage, wie z.B. Ethylacetat, Butylacetat, sowie weitere auf Acetat basierende Lösemittel, Aceton, Methylethylketon, Hexan, Heptan, Ethylalcohol, Cyclohexan etc. Der Lösemittelanteil im erfindungsgemässen Voranstrich liegt - insbesondere für die Applikation auf porösen Untergründen - im Bereich von 20 bis 80 Gew.-%, bevorzugt im Bereich von 50 bis 60 Gew.-%, wobei die Viskosität inbesondere zwischen 40 und 80 mPas liegen sollte. Bei zu tiefer Viskosität ist die Ueberdeckung eines porösen Untergrundes, wie z.B. Beton, mangelhaft, was eine verringerte Haftungsqualität bewirkt. Bei zu hoher Viskosität werden die Poren von porösen Untergründen unzureichend ausgefüllt, was aufgrund reduzierter mechanischer Verankerung des Voranstriches zum Untergrund zu einer Haftungseinbusse führt. Zudem wird die verarbeitbarkeit des Primers erschwert. Die optimale Schichtdicke liegt im trockenen Zustand zwischen 10 µm und 200 µm, insbesonders zwischen 40 µm und 90 µm. Durch Zugabe von kleinen Anteilen von thixotropierenden Füllstoffen wird mit einem Pinselstrich eine Schichtdicke von etwa 65 µm erreicht, ohne Thixotropierung beträgt eine Schichtdicke von üblicherweise ca. 48 µm.

Abhängig von der Verwendung und dem Anforderungsprofil können Additive, wie Trocknungsmittel, Katalysatoren, Pigmente, Fungizide, Stabilisatoren, Füllstoffe, wie z.B. ungecoatetes oder gecoatetes Siliciumdioxid, etc. zugemischt werden.

Erfindungsgemässe Haftvermittler enthalten Titanate oder Silangruppen, wobei der Haftvermittler mindestens eine Epoxidgruppe als zweite funktionelle Gruppe beinhaltet. Über diese zweite funktionelle Gruppe wird der Haftvermittler während resp. nach der Härtungsreaktion unter dem Einfluss der durch Feuchtigkeit freigesetzten Aminverbindung des latenten Härters, in die Matrix eingebaut.

Der Haftvermittler dient dazu, einerseits die Haftungsqualität über chemische und physikalische Vorgänge zum Untergrund zu verbessern, und andererseits dem Beschichtungsmaterial, welches bevorzugt einkomponentige und isocyanatfreie Dichtstoffe sind, Anknüpfungsgruppen zu bieten.

Der erfindungsgemässe Voranstrich kann zur Herstellung einer Beschichtung derart eingesetzt werden, dass er in einer geeigneten Schichtdicke aufgebracht und, gegebenenfalls nach einem Härtungszeitraum von vorzugsweise 30 bis 120 Minuten, mit einem einkomponentigen isocyanatfreien Klebstoff auf Silan-Basis überschichtet wird.

Im folgenden sollen einige Beispiele aufgezeigt werden, welche die Erfindung weiter veranschaulichen, den Umfang der Erfindung aber in keiner Weise beschränken sollen. Die erfindungsgemässen Voranstriche sind einfach herstellbar, lagerstabil, und besitzen eine gute Haftungseigenschaften auch nach Belastung, insbesondere nach 1 Woche Lagerung in einer gesättigten Calciumhydroxid-Lösung, und erfüllen die Normen DIN 18540F bzw. ISO 11600 25LM.

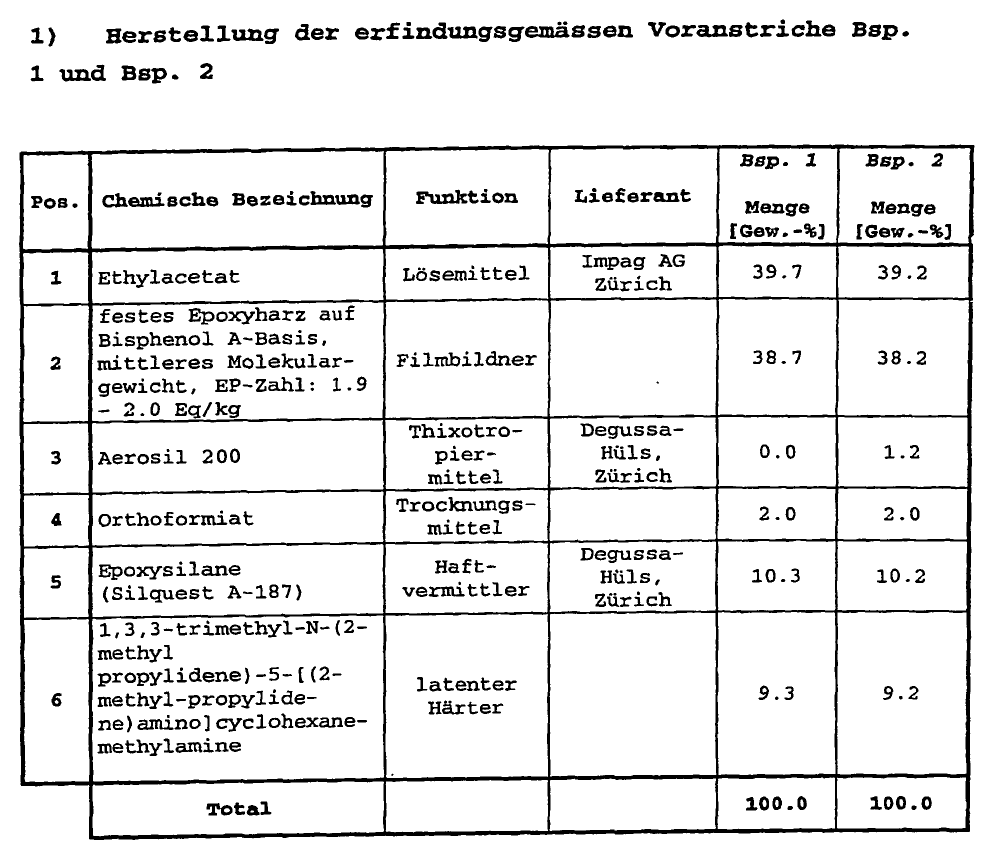

Alle Schritt wurden unter Stickstoff durchgeführt. Das Epoxyharz (Pos. 2) wurde in drei gleich grosse Portionen unterteilt. Eine Portion wurde jeweils vollständig gelöst, ehe die nächste Portion zugegeben wurde. Die Positionen 4, 5 und 6 wurden jeweils nacheinander unter ständigem Rühren hinzugegeben. Das Thixotropiermittel Aerosil 200 wurde mittels intensiven Rührens in die Epoxyharz-Lösung eindispergiert.

| **2) Prüfresultate mit dem erfindungsgemässen Voranstrich in Kombination mit PUR-Hybrid Klebstoff, Sikaflex-20AT** | | | |
|---|---|---|---|
| **Substrat** | **Referenz** | **Beispiel 1** | **Beispiel 2** |
| **Beton, sandge- strahlt** | 2/5 | 1/2 | 1/1 |
| **Gartenplatte** | 1/5 | 1/1 | 1/1 |
| **Beton, DIN- genormt** | 1/5 | 1/1 | 1/1 |
| **Ziegel** | 1/4 | 1/2 | 1/1 |
| **Klinker, porös** | 1/3 | 1/1 | 1/1 |
| **Klinker, glasiert** | 1/5 | 1/1 | 1/1 |
| **Keramik, porös** | 1/4 | 1/2 | 1/1 |
| **Buche** | 1/4 | 1/2 | 1/2 |
| Legende: 1 = >95% Kohäsionsbruch, in Ordnung (i.o.) 2 = 75% - 95% Kohäsionsbruch, i.o. 3 = 25% - 75% Kohäsionsbruch, nicht i.o. 4 = < 25% Kohäsionsbruch, nicht i.o. 5 = 0% Kohäsionsbruch, nicht i.o. | | | |

Die erste Zahl gibt die Bewertung der Haftung nach 2 Wochen Klimaraumlagerung an (23°C, 50% rel. Luftfeuchtigkeit).

Die zweite Zahl gibt die Haftung nach 2 Wochen Klimalagerung und 1 Woche Wasserlagerung bei Raumtemperatur an.

Die Beispiele 1 und 2 zeigen, dass der erfindungsgemässe Voranstrich nach der Wasserlagerung im Vergleich zur Referenz eine sehr gute Haftung gewährleistet.

Während hier gegenwärtig bevorzugte Ausführungsformen der Erfindung dargestellt und beschrieben sind, ist klar zu verstehen, dass die Erfindung nicht auf diese beschränkt ist, sondern im Rahmen der nachfolgenden Ansprüche auf andere, vielfältige Weise ausgeführt werden kann.

## Patentansprüche

1. Voranstrich, welcher mindestens ein Epoxidharz, mindestens einen latenten Härter, mindestens ein Lösemittel und mindestens ein haftvermittelndes Additiv enthält oder daraus besteht, wobei das haftvermittelnde Additiv mindestens 2 funktionelle Gruppen enthält, von denen mindestens eine eine Epoxidgruppe ist, die mit dem latenten Härter regieren kann, und mindestens eine eine Silangruppe oder eine Titanatgruppe ist, **dadurch gekennzeichnet, dass** der Voranstrich eine Viskosität zwischen 20 und 200 mPas, insbesondere zwischen 40 und 80 mPas aufweist und dass das Epoxidharz fest ist.

2. Voranstrich gemäss Anspruch 1, **dadurch gekennzeichnet, dass** das haftvermittelnde Additiv ein hydrophobes haftvermittelndes Additiv ist.

3. Voranstrich gemäss einem der Ansprüche 1 bis 2, **dadurch gekennzeichnet, dass** das Lösemittel frei von Aromaten ist.

4. Voranstrich gemäss einem der Ansprüche 1 bis 3, **dadurch gekennzeichnet, dass** der latente Härter ein Oxazolidin und/oder ein Ketimin und/oder ein Aldimin ist.

5. Voranstrich gemäss einem der Ansprüche 1 bis 4, **dadurch gekennzeichnet, dass** der latente Härter zusätzlich zu den die Härtung bewirkenden Gruppen noch zusätzlich eine Silangruppe enthält.

6. Voranstrich gemäss einem der Ansprüche 1 bis 5, **dadurch gekennzeichnet, dass** er isocyanatfrei ist.

7. Verfahren zum Aufbringen eines Voranstrichs auf einen Untergrund, **dadurch gekennzeichnet, dass** der voranstrich gemäss einem der Ansprüche 1 bis 6 in einer Schichtdicke nach Trocknung von 10 µm bis 200 µm, insbesondere von 40 µm bis 90 µm aufgetragen wird.

8. Verfahren gemäss Anspruch 7, **dadurch gekennzeichnet, dass** der Untergrund ein poröser Untergrund, insbesondere Beton, ist.

9. Verfahren zur Herstellung einer Beschichtung, **dadurch gekennzeichnet, dass** ein nach dem Verfahren gemäss Anspruch 7 oder 8 aufgebrachter Voranstrich, gegebenenfalls nach einem Härtungszeitraum von vorzugsweise 30 bis 120 Minuten, mit einem einkomponentigen isocyanatfreien Klebstoff auf Silan-Basis überschichtet wird.

10. Verwendung eines Voranstrichs gemäss einem der Ansprüche 1 bis 6 zur Verbesserung der Haftung eines einkomponentigen isocyanatfreien Klebstoffs auf Silan-Basis auf einem porösen Untergrund, insbesondere auf Beton.

11. Verwendung eines haftvermittelnden Additivs, das mindestens 2 funktionelle Gruppen enthält, von denen mindestens eine eine Epoxidgruppe ist, die mit dem latenten Härter regieren kann, und mindestens eine eine Silangruppe oder eine Titanatgruppe ist, zur Haftungsverbesserung in Voranstrichen gemäss einem der Ansprüche 1 bis 6.

## Claims

1. Undercoat, which contains at least one epoxy resin, at least one latent hardener, at least one solvent and at least one bonding agent additive or consists thereof, wherein the bonding agent additive contains at least 2 functional groups, whereof at least one is an epoxy group which can react with the latent hardener, and at least one is a silane group or titanate group, **characterized in that** the undercoat has a viscosity between 20 and 200 mPas, in particular between 40 and 80 mPas and **in that** the epoxy resin is solid.

2. Undercoat according to Claim 1, **characterized in that** the bonding agent additive is a hydrophobic bonding agent additive.

3. Undercoat according to either of Claims 1 and 2, **characterized in that** the solvent is free from aromatics.

4. Undercoat according to one of Claims 1 to 3, **characterized in that** the latent hardener is an oxazolidine and/or a ketimine and/or an aldimine.

5. Undercoat according to one of Claims 1 to 4, **characterized in that** the latent hardener in addition to the groups causing the hardening also additionally contains a silane group.

6. Undercoat according to one of Claims 1 to 5, **characterized in that** it is isocyanate-free.

7. Process for application of an undercoat onto a base, **characterized in that** the undercoat according to one of Claims 1 to 6 is applied in a layer thickness after drying of 10 µm to 200 µm, in particular 40 µm to 90 µm.

8. Process according to Claim 7, **characterized in that** the base is a porous base, in particular concrete.

9. Process for the production of a coating, **characterized in that** an undercoat applied by the process according to Claim 7 or 8, if necessary after a hardening period of preferably 30 to 120 minutes, is overlaid with a single-component, isocyanate-free, silane-based adhesive.

10. Use of an undercoat according to one of Claims 1 to 6 for improving the adhesion of a single-component, isocyanate-free, silane-based adhesive on a porous base, in particular on concrete.

11. Use of a bonding agent additive which contains at least 2 functional groups, whereof at least one is an epoxy group which can react with the latent hardener, and at least one is a silane group or titanate group, to improve adhesion in undercoats according to one of Claims 1 to 8.

## Revendications

1. Peinture préliminaire qui contient ou consiste en au moins une résine époxy, au moins un durcisseur latent, au moins un solvant et au moins un additif promoteur d'adhérence, l'additif promoteur d'adhérence comportant au moins 2 groupes fonctionnels, dont au moins un est un groupe époxy pouvant réagir avec le durcisseur latent et au moins un est un groupe silane ou un groupe titanate, **caractérisée en ce que** la peinture préliminaire a une viscosité comprise entre 20 et 200 mPa.s, en particulier entre 40 et 80 mPa.s et **en ce que** la résine époxy est solide.

2. Peinture préliminaire selon la revendication 1, **caractérisée en ce que** l'additif promoteur d'adhérence est un additif promoteur d'adhérence hydrophobe.

3. Peinture préliminaire selon la revendication 1 ou 2, **caractérisée en ce que** le solvant est exempt de composés aromatiques.

4. Peinture préliminaire selon l'une quelconque des revendications 1 à 3, **caractérisée en ce que** le durcisseur latent est une oxazolidine et/ou une cétimine et/ou une aldimine.

5. Peinture préliminaire selon l'une quelconque des revendications 1 à 4, **caractérisée en ce que**, outre les groupes provoquant le durcissement, le durcisseur latent encore comporte additionnellement un groupe silane.

6. Peinture préliminaire selon l'une quelconque des revendications 1 à 5, **caractérisée en ce qu'**elle est exempte d'isocyanate.

7. Procédé pour l'application d'une peinture préliminaire sur un support, **caractérisé en ce que** la peinture préliminaire selon l'une quelconque des revendications 1 à 6 est appliquée en une épaisseur de couche après séchage de 10 µm à 200 µm, en particulier de 40 µm à 90 µm.

8. Procédé selon la revendication 7, **caractérisé en ce que** le support est un support poreux, en particulier du béton.

9. Procédé pour la production d'un revêtement, **caractérisé en ce qu'**une peinture préliminaire, appliquée conformément au procédé selon la revendication 7 ou 8, est recouverte, éventuellement après un espace de temps de durcissement de préférence de 30 à 120 minutes, d'un adhésif monocomposant exempt d'isocyanate, à base de silane.

10. Utilisation d'une peinture préliminaire selon l'une quelconque des revendications 1 à 6, pour l'amélioration de l'adhérence d'un adhésif monocomposant exempt d'isocyanate, à base de silane, à un support poreux, en particulier à du béton.

11. Utilisation d'un additif promoteur d'adhérence, comportant au moins 2 groupes fonctionnels, dont au moins un est un groupe époxy pouvant réagir avec le durcisseur latent, et au moins un est un groupe silane ou un groupe titanate, pour l'amélioration de l'adhérence dans des peintures préliminaires selon l'une quelconque des revendications 1 à 6.
